# EUROPÄISCHE PATENTSCHRIFT

(11) **EP 0 709 030 B1**
(45) Veröffentlichungstag und Bekanntmachung des Hinweises auf die Patenterteilung: **25.08.1999**
(21) Anmeldenummer: 95116658.6
(22) Anmeldetag: 23.10.1995
(51) Int. Cl.: A22C 13/00

(54) **Wursthüllen aus thermoplastischer Stärke und Verfahren zu deren Herstellung**
Sausage casing made from thermoplastic starch and process for its production
Enveloppes pour saucisses à base d'amidon thermoplastique et leur procédé de fabrication

(30) Priorität: 31.10.1994 DE 4438961
(43) Veröffentlichungstag der Anmeldung: 01.05.1996
(73) Patentinhaber: HOECHST AKTIENGESELLSCHAFT, 65926 Frankfurt am Main (DE)
(72) Erfinder: Hammer, Klaus-Dieter, Dr., D-55120 Mainz (DE); Grolig, Gerhard, Dr., D-64546 Mörfelden-Walldorf (DE); Beissel, Dieter, D-65203 Wiesbaden (DE)
(74) Vertreter: Zounek, Nikolai, Dipl.-Ing.

(56) Entgegenhaltungen:
- EP-A- 0 400 484
- EP-A- 0 471 306
- WO-A-90/01878
- WO-A-90/05161
- FR-A- 1 260 250
- FR-A- 1 333 576
- FR-A- 1 436 576
- GB-A- 1 544 155
- US-A- 3 497 584
- DATABASE WPI Section Ch, Week 7730 Derwent Publications Ltd., London, GB; Class A97, AN 77-52921Y & JP-A-52 070 039 (SUMITOMO BAKELITE KK) , 10.Juni 1977
- CHEMICAL ABSTRACTS, vol. 81, no. 23, 9.Dezember 1974 Columbus, Ohio, US; abstract no. 150746j, 'PROTEIN FILM FOR SAUSAGE CASING' Seite 419; Spalte 2; & JP-A-74 059 158 (NIHON KOYU CO., LTD.) 8.Juni 1974

## Beschreibung

Die vorliegende Erfindung betrifft eine schlauchförmige Wursthülle sowie ein Extrusionsverfahren zu ihrer Herstellung.

Bedeutung erlangten bei der Wurstherstellung praktisch nur die Kollagendärme (= Hautfaserdärme), die Cellulosehydratdärme und die Därme aus synthetischen Polymeren. Letztere bestehen allgemein aus Polyamid, Polyethylen, Polypropylen, Polyethylenterephthalat, Polybutylenterephthalat oder Polyvinylidenchlorid-Mischpolymerisaten. Andere Kunstdärme, wie Därme aus eiweiß- oder acrylatbeschichtetem Gewebe, sind kaum erwähnenswert.

Kollagen- und Cellulosehydratdärme haben den Vorteil, daß sie aus nachwachsenden Rohstoffen hergestellt werden, biologisch abbaubar und damit kompostierbar sind. Die Verfahren zu ihrer Herstellung sind jedoch allgemein sehr aufwendig und umweltbelastend. So stellt man beispielsweise Kunstdärme auf der Basis von Cellulosehydrat nach dem Viskoseverfahren her, bei dem Natronlauge und Schwefelkohlenstoff verwendet werden.

Die aus synthetischen Polymeren hergestellten Därme lassen sich einfach und preiswert durch Extrusion herstellen, aber sie sind nicht biologisch abbaubar und müssen daher aufwendig entsorgt werden.

Es bestand somit die Aufgabe, eine Wursthülle zur Verfügung zu stellen, die die Vorteile der bekannten Hüllen in sich vereinigt. Sie sollte für alle Wursttypen geeignet, aus nachwachsenden Rohstoffen einfach und umweltfreundlich herstellbar und biologisch abbaubar sein.

Die Aufgabe wurde gelöst durch die Verwendung von thermoplastisch verarbeitbarer Stärke.

Natürliche Stärke, wie Kartoffel-, Mais- oder Getreidestärke, besteht aus Makromolekülen und ist sehr inhomogen. Die Makromoleküle liegen in Form einer α-Helix vor. Beim Erhitzen zersetzt sich die natürliche Stärke bevor sie die Schmelztemperatur erreicht. Wird vorher Wasser hinzugefügt, erhält man eine thermoplastisch verarbeitbare Masse. Da Wasser aufgrund des niedrigen Siedepunkts verfahrenstechnisch nicht so günstig ist, sind Zuschlagstoffe wie Glycerin, Ethylenglykol oder Propylenglykol besser geeignet, da sie einen höheren Siedepunkt haben. Der Anteil dieser Zuschlagstoffe sollte mindestens 5 Gew.-%, bezogen auf das Gewicht der trockenen Stärke, betragen.

Thermoplastische Stärke, Verfahren zu ihrer Herstellung sowie daraus hergestellte Formkörper sind aus den WO 90/05161 und 90/10019 bekannt. Als Verwendungszwecke wurden angegeben: Füllstoff oder Formulierungshilfsstoff in thermoplastischen und duroplastischen Polymeren oder Trägermaterial für Wirkstoffe, wie Pharmawirkstoffe, oder Reagenzien, wie Flockierungsmittel für Abwässer. Extrudierte Folien aus thermoplastischer Stärke sollen in einer wasserarmen Umgebung oder auf einer wasserdurchlässigen Unterlage ausgelegt werden und Wasser binden. Dadurch soll in wüstenähnlichen Gegenden die Bewässerung des Bodens effizienter gestaltet werden. Es gab bisher keinerlei Hinweis, daß die thermoplastische Stärke zur Herstellung von Wursthüllen geeignet sein könnte, noch dazu solchen, die einen weiten Anwendungsbereich abdecken.

Als Ausgangsmaterial zur Herstellung der Wursthüllen dient die thermoplastische Stärke, die in den genannten WO-Schriften offenbart ist. Diese Stärke liegt allgemein als Granulat oder in Form von Kügelchen vor. Es ist entscheidend für die Herstellung von Wursthüllen mit optimalen Eigenschaften, daß die natürliche Stärke unter Aufhebung der α-Helix-Struktur in den amorphen Zustand überführt wird. Das gelingt beispielsweise durch Erhitzen und mechanisches Mischen, zweckmäßig in einem Kneter oder in einem Ein- oder Zweischnecken-Extruder. Um ein Schmelzen der Stärke unterhalb der Zersetzungstemperatur zu erreichen, werden die bekannten Plastifizierungsmittel, wie Wasser, Butan-1,3-diol, Glycerin, Diglycerin, N,N-Dimethyl-harnstoff, Sorbit oder Citrat, verwendet.

Beim Plastifizieren mit Wasser wird dieses in einem Anteil von etwa 15 bis 25 Gew.-%, bevorzugt etwa 17 Gew.-%, jeweils bezogen auf das Gewicht der plastifizierten Stärke, verwendet. Die Temperatur sollte etwa 100 bis 130 °C betragen. Beim Plastifizieren mit Glycerin reicht ein Anteil von 0,5 bis 20 Gew.-%, vorzugsweise 8 bis 16 Gew.-%, aus, wiederum jeweils bezogen auf das Gewicht der Stärke. Die Temperatur liegt in diesem Fall zweckmäßig etwas höher. Günstig sind 150 bis 170 °C. Der kristalline Anteil sollte in der thermoplastischen Stärke auf jeden Fall weniger als 5 Gew.-% betragen.

Um die Hüllen den verschiedenen Wursttypen anzupassen, werden der granulierten thermoplastischen Stärke geeignete Stoffe hinzugefügt. Das sind insbesondere Fasern, die die mechanische Festigkeit erhöhen. Solche Wursthüllen sind neu und Teil der vorliegenden Erfindung.

Hüllen für Rohwurst enthalten zweckmäßig neben der thermoplastischen Stärke
- 5 bis 30 Gew.-%,: bevorzugt 10 bis 20 Gew.-%, Faserverstärkung, bevorzugt Baumwollkämmlinge,
- 3 bis 25 Gew.-%,: bevorzugt 5 bis 15 Gew.-%, Protein, bevorzugt Gelatine, Casein oder Weizenprotein, und
- 2 bis 15 Gew.-%,: bevorzugt 3 bis 10 Gew.-%, Vernetzungsmittel, bevorzugt eine Dicarbonsäure, einen Dialdehyd, ein Diisocyanat oder ein Diepoxid.

Diese und auch die folgenden Angaben in Gew.-% beziehen sich auf das Gewicht der plastifizierten Stärke (Gesamtgewicht von Stärke + Plastifizierungsmittel).

Um den Anforderungen für Brüh- und Kochwurst bzw. -schinken zu genügen, ist eine Faserverstärkung notwendig. Dafür eignen sich besonders Baumwoll-Linters, synthetische Fasern oder Regeneratfasern (= Fasern aus regenerierter Cellulose). Der Anteil der Faserverstärkung beträgt allgemein 3 bis 25 Gew.-%, bevorzugt 5 bis 15 Gew.-%.

Eine weitere Qualitätsverbesserung - je nach Anwendungsbereich - läßt sich durch zusätzliche synthetische Polymere, bevorzugt weiche und zähe Polyamide, Polyester, Polyolefine, Ethylen/Acrylsäureethylester/Maleinsäureanhydrid-Copolymere oder Polyvinylpyrrolidon (PVP) erzielen. Die Polyolefine sind bevorzugt Hochdruckpolyethylene oder Polypropylene. Der Anteil der synthetischen Polymere beträgt zweckmäßig 5 bis 50 Gew.-%, bevorzugt 10 bis 40 Gew.-%. Vernetzungsmittel steigern die Wasserbeständigkeit. Deren Anteil beträgt bei den Hüllen für Brühwurst und Kochschinken 2 bis 20 Gew.-%, bevorzugt 3 bis 12 Gew.-%. Bevorzugte Vernetzungsmittel sind bereits bei den Rohwursthüllen genannt. Gleitmittel können die Extrusion erleichtern. Hierfür sind insbesondere die bereits in der oben genannten WO 90/05161 offenbarten tierischen oder pflanzlichen Fette oder Lecithine geeignet. Gleitmittel verbessern die Schälbarkeit und ebenfalls die Wasserbeständigkeit. Ihr Anteil beträgt allgemein 2 bis 12 Gew.-%, bevorzugt 3 bis 6 Gew.-%.

Faserfreie, transparente Hüllen enthalten zweckmäßig neben der thermoplastischen Stärke Alginat, Chitosan, extrudierbare Cellulose-Derivate (bevorzugt Celluloseacetat oder -propionat) und/oder Proteine (bevorzugt Gelatine). Die zusätzlichen Bestandteile haben einen Anteil von 5 bis 70 Gew.-%, bevorzugt 20 bis 50 Gew.-%. Zur Verbesserung der mechanischen Stabilität sowie der Wasser- und Kochbeständigkeit können zusätzlich die oben genannten Vernetzungsmittel in einem Anteil von 2 bis 15 Gew.-%, bevorzugt 5 bis 10 Gew.-%, vorhanden sein. Die Geschmeidigkeit der verstreckten Wursthülle kann noch mit einem Weichmacher, bevorzugt Glycerin oder Citronensäureester, verbessert werden. Der Anteil des hinzugefügten Weichmachers beträgt 3 bis 30 Gew.-%, bevorzugt 5 bis 20 Gew.-%.

Ein Verfahren zur Herstellung der Wursthüllen auf Stärkebasis ist ebenfalls Gegenstand der vorliegenden Erfindung. Das Verfahren ist dadurch gekennzeichnet, daß die Mischung aus thermoplastischer Stärke und den übrigen Bestandteilen mit Hilfe eines Extruders, vorzugsweise eines Ein- oder Zweischnecken-Extruders, und einer daran angeschlossenen Ringdüse, die auf 100 bis 140 °C, bevorzugt 105 bis 120 °C, erhitzt ist, zu einer schlauchförmigen Hülle geformt, diese dann aufgeblasen und im Verhältnis 1:2 bis 1:10, bevorzugt 1:3 bis 1:5, jeweils bezogen auf die Fläche, verstreckt wird. In dem Extruder bildet sich dabei eine homogene Schmelze. Während des Verstreckens durch Blasformen wird die Hülle vorzugsweise mit Luft aufgeblasen.

In einem weiteren Schritt kann anschließend innen und/oder außen eine Imprägnierung oder Beschichtung aufgebracht werden. Sie dient insbesondere zur Verbesserung der Bräthaftung oder zur Erhöhung der Schimmelresistenz.

Die Wursthüllen auf Stärkebasis weisen alle positiven Eigenschaften der Cellulosehydrathüllen auf. Die von den Cellulosehydrathüllen bekannten Imprägnierungen oder Beschichtungen sind allgemein auch für die Stärkehüllen geeignet. Insbesondere können auch Schichten aufgebracht werden, die als Barriere für Sauerstoff und/oder Wasserdampf wirken. Die Stärkehüllen lassen sich dadurch allen wichtigen Wursttypen anpassen.

### Herstellung der thermoplastischen Stärke

100 kg Kartoffelstärke wurden im Vakuum getrocknet bis der Wassergehalt weniger als 0,3 Gew.-% betrug. Die Stärke wurde dann mit 50 kg Glycerin (99 gew.-%ig) in einem Kneter bei einer Temperatur von 160 bis 190 °C vermischt. Zur Aufhebung der Helixstruktur wurde die dabei erzeugte Schmelze etwa 2 Stunden lang bei einer Temperatur von 170 °C gehalten. Danach wurde sie extrudiert und granuliert. Die Stärke blieb in dem Granulat auch nach längerer Lagerung fast vollständig amorph.

### Beispiel 1

Zur Herstellung einer Rohwursthülle mit Faserverstärkung wurden
- 75,0 kg: des oben beschriebenden Granulats (50 kg Stärke + 25 kg Glycerin) mit
- 10,0 kg: Baumwoll-Linters,
- 10,0 kg: Gelatine,
- 2,5 kg: Adipinsäure und
- 2,5 kg: Sonnenblumenöl
vermischt, bei 110 bis 120 °C extrudiert und im Verhältnis 1:8, bezogen auf die Fläche, längs- und querverstreckt. Auf diese Weise erhielt man einen Schlauch vom Kaliber 60 (= 60 mm) mit einer Wanddicke von 90 µm.

Der Schlauch wurde dann flachgedrückt, aufgewickelt und anschließend zu Raupen aufgestockt oder zu einseitig abgebundenen Abschnitten konfektioniert.

Um die mechanischen Eigenschaften der Hülle zu testen, wurde sie gewässert und einer Druckprobe unterzogen. Sie platzte erst bei einem Druck von 65 bis 72 kPa (Platzdruck). Die statische Dehnung bei 21 kPa lag bei 65 bis 75 mm.

Um die Anwendbarkeit zu testen, wurden die Hüllen mit Salamibrät gefüllt und dem üblichen Reifungsvorgang unterzogen. Während des Reifens löste sich die Hülle nicht vom Brät, d.h. es kam nicht zum sogenannten "Abstellen" der Hülle. Die Schälbarkeit der gereiften Salami wurde mit "2" beurteilt (Notenskala von 1 bis 6; 1 = sehr gute Schälbarkeit, 6 = nicht mehr schälbar).

### Beispiel 2

Zur Herstellung einer Hülle für Brüh- und Kochwurst bzw. -schinken wurden
- 75,0 kg: des oben beschriebenen Granulats mit
- 7,5 kg: Baumwoll-Linters,
- 20,0 kg: eines weichen, geschmeidigen Copolyamids,
- 5,0 kg: Glyoxal und
- 7,5 kg: Lecithin
gemischt. Das Gemisch wurde durch etwa halbstündiges Kneten bei 185 °C homogenisiert und dann durch eine Ringdüse für Kaliber 60 extrudiert. Durch Blasformen wurde die schlauchförmige Hülle dann im Verhältnis 1:6 (bezogen auf die Fläche) längs- und querverstreckt. Die Wandstärke des verstreckten Schlauches betrug 85 µm. Der Platzdruck der gewässerten Hüllen lag bei 72 kPa, die statische Dehnung bei 21 kPa bei 68 mm.

Ein gewässertes, einseitig abgebundenes Stück der Hülle wurde dann mit Fleischwurstbrät gefüllt. Die Hülle ließ sich von der wie üblich gebrühten und geräucherten Wurst problemlos abziehen.

### Beispiel 3

Zur Herstellung einer faserfreien, transparenten Wursthülle wurden
- 75,0 kg: des oben beschriebenen Granulats mit
- 20,0 kg: Gelatine,
- 10,0 kg: Chitosan,
- 7,5 kg: Glyoxal,
- 5,0 kg: Acetylcitronensäure-triethylester (^{(R)}Citroflex A4) und
- 2,5 kg: Lecithin
gemischt, in einem Extruder bei 178 °C zu einer homogenen Schmelze verarbeitet und durch eine Ringdüse für Kaliber 75 extrudiert. Die schlauchförmige Hülle wurde dann durch Blasverformen im Verhältnis 1:8 (bezogen auf die Fläche) längs- und querverstreckt, anschließend flachgedrückt und aufgewickelt. Die Wandstärke der verstreckten Hülle betrug 108 µm. Der Platzdruck der gewässerten Hülle lag bei 30 kPa. Die statische Dehnung bei 15 kPa betrug 88 bis 92 mm.

Einseitig abgebundene Abschnitte der schlauchförmigen Hülle wurden mit Bierwurstbrät gefüllt. Nach dem Brühen und Räuchern ließ sich die Hülle gut vom Brät abschälen.

### Beispiel 4

Eine faserfreie Hülle ließ sich auch mit Stärke herstellen, die mit Wasser anstelle von Glycerin plastifiziert war. Dazu wurden
- 100,0 kg: Kartoffelstärke mit
- 7,0 kg: Wasser,
- 1,0 kg: Sonnenblumenöl und
- 0,5 kg: Lecithin
gemischt. Das Gemisch wurde in einem Kneter bei 165 °C geschmolzen und 1 Stunde lang homogenisiert. Danach wurde die Schmelze extrudiert und granuliert.
- 60,0 kg: des so hergestellten Granulats wurden dann mit
- 10,0 kg: Gelatine,
- 10,0 kg: Chitosan,
- 10,0 kg: Glycerin,
- 7,5 kg: Glyoxal und
- 5,0 kg: Sonnenblumenöl
vermischt. Das Gemisch wurde mit Hilfe eines Extruders in eine homogene Schmelze verwandelt und durch eine Ringdüse für Kaliber 80 extrudiert. Durch Blasverformen im Verhältnis 1:6 (bezogen auf die Fläche) wurde die schlauchförmige Hülle dann längs- und querverstreckt. Anschließend wurde die Hülle flachgelegt und aufgerollt. Die Wandstärke der verstreckten Hülle betrug 95 µm. Der Platzdruck der gewässerten Hülle lag bei 22 kPa. Die statische Dehnung bei 15 kPa lag bei 95 bis 100 mm.

Einseitig abgebundene Teilstücke der Hülle wurden mit Dauerwurstbrät gefüllt. Die Würste reiften einwandfrei und ließen sich gut schälen.

## Patentansprüche

1. Verwendung von thermoplastisch verarbeitbarer Stärke in Wursthüllen.

2. Hülle für Rohwurst auf der Basis von thermoplastischer Stärke, dadurch gekennzeichnet, daß sie neben thermoplastischer Stärke
5 bis 30 Gew.-% Faserverstärkung,
3 bis 25 Gew.-% Protein und
2 bis 15 Gew.-% Vernetzungsmittel
enthält.

3. Hülle für Brühwurst und Kochschinken auf der Basis von thermoplastischer Stärke, dadurch gekennzeichnet, daß sie neben thermoplastischer Stärke 3 bis 25 Gew.-% einer Faserverstärkung enthält.

4. Hülle gemäß Anspruch 3, dadurch gekennzeichnet, daß sie zusätzlich synthetische Polymere, Vernetzungsmittel und/oder Gleitmittel enthält.

5. Hülle gemäß Anspruch 4, dadurch gekennzeichnet, daß der Anteil der synthetischen Polymere 5 bis 50 Gew.-%, bevorzugt 10 bis 40 Gew.-%, der Anteil der Vernetzungsmittel 2 bis 20 Gew.-%, bevorzugt 3 bis 12 Gew.-% und der Anteil der Gleitmittel 2 bis 12 Gew.-%, bevorzugt 3 bis 6 Gew.-%, beträgt.

6. Faserfreie, transparente Wursthülle auf der Basis thermoplastischer Stärke, dadurch gekennzeichnet, daß sie neben thermoplastischer Stärke Alginat, Chitosan, extrudierbare Cellulose-Derivate und/oder Proteine in einem Anteil von 5 bis 70 Gew.-%, enthält.

7. Hülle gemäß Anspruch 6, dadurch gekennzeichnet, daß sie Vernetzungsmittel in einem Anteil von 2 bis 15 Gew.-%, bevorzugt 5 bis 10 Gew.-%, und/oder Weichmacher in einem Anteil von 3 bis 30 Gew.-%, bevorzugt 5 bis 20 Gew.-%, enthält.

8. Verfahren zur Herstellung der Wursthüllen gemäß den Ansprüchen 2 bis 7, dadurch gekennzeichnet, daß die Mischung aus thermoplastischer Stärke und den übrigen Bestandteilen mit Hilfe eines Extruders und einer daran angeschlossenen Ringdüse, die auf 100 bis 140 °C erhitzt ist, zu einer schlauchförmige Hülle geformt werden, diese dann aufgeblasen und im Verhältnis 1:2 bis 1:10, jeweils bezogen auf die Fläche, verstreckt wird.

9. Verfahren gemäß Anspruch 8, dadurch gekennzeichnet, daß die schlauchförmige Hülle im Verhältnis 1:3 bis 1:5, jeweils bezogen auf die Fläche, verstreckt wird.

10. Verfahren gemäß Anspruch 8 oder 9, dadurch gekennzeichnet, daß auf die verstreckten Wursthüllen innen und/oder außen eine Imprägnierung oder Beschichtung aufgebracht wird.

## Claims

1. Use in sausage casings of starch which can be processed like a thermoplastic.

2. A thermoplastic-starch-based casing for raw sausage, which casing, apart from thermoplastic starch, contains
5 to 30 % by weight of fiber reinforcement,
3 to 25 % by weight of protein and
2 to 15 % by weight of crosslinker.

3. A thermoplastic-starch-based casing for scalded-meat sausage and cooked ham which, apart from thermoplastic starch, contains 3 to 25 % by weight of a fiber reinforcement.

4. The casing as claimed in claim 3, wherein it additionally contains synthetic polymers, cross-linkers and/or lubricants.

5. The casing as claimed in claim 4, wherein the proportion of the synthetic polymers is 5 to 50 % by weight, preferably 10 to 40 % by weight, the proportion of the crosslinkers is 2 to 20 % by weight, preferably 3 to 12 % by weight and the proportion of the lubricants is 2 to 12 % by weight, preferably 3 to 6 % by weight.

6. A thermoplastic-starch-based, fiber-free, transparent sausage casing which, in addition to thermoplastic starch, contains alginate, quitosan, extrudable cellulose derivatives and/or proteins in a proportion of from 5 to 70 % by weight.

7. The casing as claimed in claim 6, wherein it contains crosslinkers in a proportion of from 2 to 15 % by weight, preferably 5 to 10 % by weight, and/or softeners in a proportion of from 3 to 30 % by weight, preferably 5 to 20 % by weight.

8. A process for the production of sausage casings as claimed in claims 2 to 7, which comprises molding the mixture of thermoplastic starch and the remaining constituents using an extruder and a ring die attached thereto which is heated to 100 to 140°C to give a tubular casing, then inflating this and stretching it in the ratio 1:2 to 1:10, based on the surface area in each case.

9. The process as claimed in claim 8, wherein the tubular casing is stretched in the ratio of 1:3 to 1:5, based on the surface area in each case.

10. The process as claimed in claim 8 or 9, wherein an impregnation or coating is applied internally and/or externally to the stretched sausage casings.

## Revendications

1. Utilisation d'amidon apte à la transformation thermoplastique, dans des enveloppes pour saucisses.

2. Enveloppe pour saucisse crue, à base d'amidon thermoplastique, caractérisée en ce qu'elle contient, en plus d'amidon thermoplastique,
5 à 30 % en poids de renfort fibreux,
3 à 25 % en poids de protéine et
2 à 15 % en poids d'agent de réticulation.

3. Enveloppe pour saucisse à bouillir et jambon à cuire, à base d'amidon thermoplastique, caractérisée en ce qu'elle contient, en plus d'amidon thermoplastique, 3 à 25 % en poids d'un renfort fibreux.

4. Enveloppe selon la revendication 3, caractérisée en ce qu'elle contient en outre des polymères synthétiques, agents de réticulation et/ou lubrifiants.

5. Enveloppe selon la revendication 4, caractérisée en ce que la proportion des polymères synthétiques va de 5 à 50 % en poids, de préférence de 10 à 40 % en poids, la proportion des agents de réticulation va de 2 à 20 % en poids, de préférence de 3 à 12 % en poids, et la proportion des lubrifiants va de 2 à 12 % en poids, de préférence de 3 à 6 % en poids.

6. Enveloppe pour saucisse sans fibres, transparente, à base d'amidon thermoplastique, caractérisée en ce qu'elle contient, en plus d'amidon thermoplastique, de l'alginate, du chitosane, des dérivés de cellulose pouvant être extrudés et/ou des protéines en une proportion de 5 à 70 % en poids.

7. Enveloppe selon la revendication 6, caractérisée en ce qu'elle contient des agents de réticulation en une proportion de 2 à 15 % en poids, de préférence de 5 à 10 % en poids, et/ou des plastifiants en une proportion de 3 à 30 % en poids, de préférence de 5 à 20 % en poids.

8. Procédé pour la fabrication des enveloppes pour saucisses selon les revendications 2 à 7, caractérisé en ce que le mélange d'amidon thermoplastique et des autres composants est moulé en une enveloppe en forme de boyau à l'aide d'une extrudeuse et d'une filière annulaire annexée à celle-ci, qui est chauffée à 100-140°C, cette enveloppe en forme de boyau est ensuite soufflée et étirée en un rapport allant de 1:2 à 1:10, dans chaque cas relativement à la surface.

9. Procédé selon la revendication 8, caractérisé en ce que l'enveloppe en forme de boyau est étirée en un rapport allant de 1:3 à 1:5, dans chaque cas relativement à la surface.

10. Procédé selon la revendication 8 ou 9, caractérisé en ce qu'une imprégnation ou un revêtement est appliqué à l'intérieur ou à l'extérieur sur les enveloppes pour saucissées, étirées.
